# EUROPEAN PATENT APPLICATION

(11) **EP 3 604 455 A1**
(43) Date of publication of application: **05.02.2020**
(21) Application number: 18186788.8
(22) Date of filing: 01.08.2018
(51) Int. Cl.: C09D 5/00, C03C 17/32, C03C 27/00, C09D 175/04, C09J 175/04, B32B 17/10

(54) **COMPOSITION FOR GLASS TREATMENT AND USE THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a composition for glass treatment and use thereof. The composition comprises a silane coupling agent, a silane-terminated polyurethane prepolymer, an optional organic solvent and an optional catalyst. The prior three-step method for sealing glass on cars can be modified to a two-step method by the composition according to the present invention which combines a glass surface activator and a primer together, thus simplifying application process, saving processing time and increasing productivity substantially.

## Description

### Technical Field

The present invention relates to the technical field of sealing material. Specifically, it relates to a composition for glass treatment and use thereof.

### Background Art

Automotive output is getting higher and higher in China. Every car needs glass and each glass needs to be tightly bound with the car body to be sufficiently sealed. The sealing effect of the automotive glass is directly related to the effect of sound insulation and comfort provided by the car. Every manufacturer tries to improve the production efficiency only on the premise of guaranteeing the sealing effect of the automotive glass as far as possible.

Generally, commercial automotive glass products need to go through the following three processes in order to be sealed as windows, skylights or windshields after pre-treatment:
1. glass activation: an amino- or hydroxyl-containing silane coupling glass activator is coated on the glass surface and after several minutes or 1-2 hours, the silane coupling agent is hydrolyzed and deposited on the glass surface and bound with the glass tightly via chemical bonds;
2. priming resin coating: the activated glass is coated with an isocyanate group-containing prepolymer priming resin wherein the isocynate groups react with the amino groups or hydroxyl groups on the glass surface after the silane coupling glass activating reaction (sometimes heating is required), a layer of polyurethane priming material is further coated on the glass surface, so as to make it compatible with the subsequent polyurethane resin system;
3. sealing and fixing with a polyurethane RIM (reaction injection moulding) resin system: after the reaction of the polyurethane prepolymer and the amino- or hydroxyl-containing silane coupling glass activator is completed, the glass is placed into a mold and the polyurethane RIM system is injected, to complete the product manufacture.

These three different production steps are generally carried out in two to three adjacent areas in a factory workshop and each occupies a certain working area. If the glass activation and the priming resin coating are combined, the isocyanate groups in the polyurethane prepolymer system will react chemically with the amino groups in the silane coupling agent, to generate a material with high molecular weight and high viscosity, even a particulate material, which is not suitable for subsequent on-site coating operation, while the bonding strength between the product and the glass and also the film quality cannot be kept stable.

CN101031520A discloses a method for activating glass surface by direct rubbing against the glass surface. The glass surface is activated by an abrasive belt which is self-closed and traveling on the glass surface. After the glass is activated, a hydrophobic coating layer (e.g., a fluorinated silane layer) can be deposited. The glass coated with a hydrophobic coating layer may be used as window glass of motor vehicles. This method is suitable for the production of non-sealed glass for vehicle windows, which are not suitable for being sealed with a polymer because of containing fluorinated silane, being easy of self-cleaning and poor adhesion with a polymer.

US 4911984 discloses a method for manufacturing skylight of automotive sunroof comprising activating two glass sheets with γ-glycidoxypropyltrimethoxysilane (Momentive A-187) and then interposing a plastic material (such as ethylene-vinyl acetate copolymer, polybutylene terephthalate) between the two glass sheets.

US 5206285 discloses an effective method for anti-corrosive treatment to metal surfaces with a mixed aqueous solution of epoxytrialkoxysilane and equimolar primary aminotrialkoxysilane in the presence of a volatile organic acid, a waterproof film is formed through a 1:1 quantitative reaction of epoxy group and amino group.

US 5468317 discloses an adhesive solution primer for automotive glass used for bonding a non-porous substrate and an automobile glass, which is synthesized by the reaction of an epoxy silane and an amino silane in a ratio of 2:1 with an epoxy resin and the like. Such adhesive primer for automobile glass synthesized by reactions of silane and epoxy resin and the like can substantially improve the bonding strength between the primer and the non-porous substrate. Such primers can also improve the bonding strength with the subsequently applied "fast cure" polyurethane adhesive. However, the bonding strength between such systems and polyurethane RIM sealing system is not high.

US 5115086 discloses that the primer solution generated by the reaction of a polyester based on a carboxylic acid and a glycol with an isocyanate can improve the bonding strength between the metal substrate and glass bound by the subsequent "fast cure" polyurethane adhesive. Silane activator is coated on the glass before the primer is coated.

There is a need for fixing and sealing glass effectively and quickly in the field.

### Summary of the Invention

The present invention aims to improve the current conventional three-step method for sealing automotive glass with polyurethane, so as to achieve fast fixing and sealing of glass.

Therefore, according to the first aspect of the present invention, there provides a composition for glass treatment, comprising a silane coupling agent, a silane-terminated polyurethane prepolymer, an optional organic solvent and an optional catalyst.

According to the second aspect of the present invention, there provides a method for manufacturing a bulk with glass fixed thereon, comprising the steps of:
I) coating the composition for glass treatment according to the present invention on the surface of the glass; and
II) injecting a polyurethane RIM system between the glass surface coated with the composition and the bulk, and reacting the polyurethane RIM system to cure.

According to the third aspect of the present invention, there provides a bulk with glass fixed thereon manufactured by the method according to the second aspect of the present invention.

According to the forth aspect of the present invention, there provides use of the bulk with glass fixed thereon according to the present invention for manufacturing vehicles.

The prior three-step method for sealing automotive glass can be modified to be a two-step method with the composition of the present invention which combines the glass surface activator and the primer together, thus simplifying application process, saving processing time and increasing productivity substantially.

Compared with silane coupling agent, the composition of the present invention, which comprises both a silane coupling agent and a silane-terminated polyurethane prepolymer, shows substantially enhanced storage stability and significantly reduced sensitivity to water.

The composition of the present invention shows a higher compatibility and a similar adhesion with the subsequently applied polyurethane system, but with reduced processing steps and a higher productivity.

### Brief Description of the Drawings

The present invention is hereinafter illustrated and explained in more detail in connection with the accompanying drawings, wherein:
Figure 1 is a flow chart of sealing and fixing glass according to the prior art in comparative example 1;
Figure 2 is a flow chart of sealing and fixing glass with the composition of the present invention;
Figure 3 is a schematic diagram of a mold for testing the bonding strength between the polyurethane RIM system and the glass.

### Detailed Description of the Invention

The present invention is now described for the purpose of illustration without limitation.

Unless in the examples or indicated otherwise, it is to be understood that all of the numbers indicating quantities, percentages and the like in the present specification and claims are in all cases modified by the term "about".

According to the first aspect of the present invention, there provides a composition for glass treatment, comprising a silane coupling agent, a silane-terminated polyurethane prepolymer, an optional organic solvent and an optional catalyst.

### Silane Coupling Agent:

The silane coupling agent used in the composition of the present invention is used to activate glass. After treating with the silane coupling agent, the surface of the glass is transformed from hydrophilic to organophilic and thus its wettability to organic polymers can be enhanced.

The silane coupling agent suitable for the present invention may be represented by the general formula (I):

Y-R¹-Si-(CH₃)ₙX₃₋ₙ (I)

wherein:
X is selected independently from: Cl, CH₃O-, C₂H₅O-, (CH₃)₂CH-O-, CH₃OCH₂CH₂O-;
R¹ is an alkylene group containing 1-20 carbon atoms;
Y is selected from -NH₂, -NHR² and isocyanate group, wherein R² is selected from alkyl groups containing 1-10 carbon atoms;
n is 0 or 1.

The silicon units in the silane coupling agent may go through two successive reactions. Firstly, they must be activated through hydrolysis reaction. Then the resultant silanol will be subjected to homopolymerization or grafted to inorganic or hydroxylated surfaces through condensation reaction. The hydrolysis reaction generally involves addition of hydroxyl groups to silicon atoms (under an alkaline condition), or addition of hydrogen atoms to oxygen atoms (under an acidic condition).

In preferred embodiments, in the silane coupling agent of formula (I), Y is selected from -NH₂ and -NHR₂, wherein the group R² is selected from alkyl groups containing 1-10 carbon atoms, preferably 1-6 carbon atoms, more preferably 1-4 carbon atoms.

Further more preferably, R¹ is an alkylene group containing 1-10 carbon atoms, preferably 1-6 carbon atoms, more preferably 1-4 carbon atoms.

As examples of the silane coupling agent, the following can be mentioned: γ-ureidopropyltrimethoxysilane, bis-(γ-trimethoxysilylpropyl)amine, 3-aminopropyltriethoxysilane, 3-aminopropyltrimethoxysilane, 3-aminopropylmethyldiethoxysilane, 3-aminopropylmethyldimethoxysilane, N-(2-aminoethyl)-3-aminopropylmethyldimethoxysilane, N-(2-aminoethyl)-3-aminopropyltrimethoxysilane, bis(3-trimethoxysilylpropyl)amine, diethylenetriaminopropyltrimethoxysilane, diethylaminomethyltriethoxysilane, N-phenyl-3-aminopropyltrimethoxysilane, 3-isocyanatopropyltriethoxysilane, 3-isocyanatopropyltrimethoxysilane.

In preferred embodiments, the amount of the silane coupling agent is 0.2 wt.% to 3 wt.%, more preferably 0.2 wt.% to 2.5 wt.%, more preferably 0.3 wt.% to 1.5 wt.%, based on that the total weight of the composition is 100 wt.%.

The amount of the silane coupling agent mentioned in the present application refers to the amount of the silane coupling agent present independently from the silane-terminated polyurethane prepolymer, not including the amount of the silane already terminated on the prepolymer.

### Silane-Terminated Polyurethane Prepolymer:

The silane-terminated polyurethane prepolymer used in the composition of the present invention can be for example prepared by the following two synthetic routes: 1) amino-terminated silane route; 2) NCO-silane route.

The amino-terminated silane route is hereinafter described with polyether diol, diisocyanate and N-alkylaminopropylenetrimethoxysilane as raw materials. 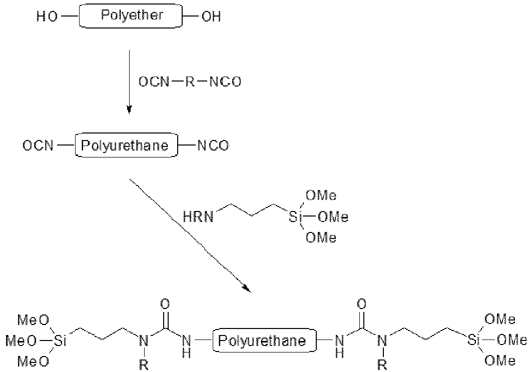 Synthesis of Silane-Terminated Polyurethane Prepolymer by Amino-Terminated Silane Route

The NCO-silane route is hereinafter described with polyether diol and isocyanatopropylenetrimethoxysilane as raw materials. 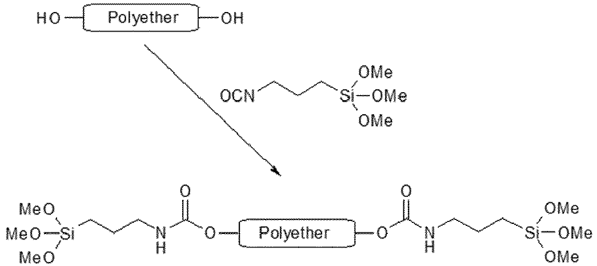 Synthesis of Silane-Terminated Polyurethane Prepolymer by NCO-Silane Route

Therefore, the silane-terminated polyurethane prepolymer useful in the present invention may be synthesized with a polyisocyanate, a polyol and a N-alkylaminoalkylenetrialkoxysilane, or alternatively with a polyol and an isocyanatoalkylenetrialkoxysilane.

That is to say, the silane-terminated polyurethane prepolymer useful in the present invention may be obtained by reacting a system comprising the following components:
A) a polyisocyanate of the following formula (II):

   R³(NCO)ₙ formula (II)

   wherein
   R³ is selected from aliphatic hydrocarbon-based groups containing 2-18 carbon atoms, aromatic hydrocarbon-based groups containing 6-15 carbon atoms and araliphatic hydrocarbon-based groups containing 8-15 carbon atoms;
   n is 2-4;
B) a polyol, which has a number-average molecular weight of 100-20000g/mol, preferably of 200-2000g/mol, and a functionality of 1-5, preferably of 2-3 (calculated according to GB/T 7383-2007-Determination of hydroxyl value); and
C) a N-alkylaminoalkylenetrialkoxysilane of the following formula (III):

   R⁴NH-R⁵-Si(OR⁶)₃ (III)

   wherein
   R⁴ is selected from alkyl groups containing 1-10 carbon atoms;
   R⁵ is selected from alkylene groups containing 1-20 carbon atoms;
   R⁶ is selected from alkyl groups containing 1-10 carbon atoms.

Alternatively, the silane-terminated polyurethane prepolymer useful in the present invention may be obtained by reacting a system comprising the following components:
a) a polyol, which has a number-average molecular weight of 100-20000g/mol, preferably of 200-2000g/mol, and a functionality of 1-5, preferably of 2-3 (calculated according to GB/T 7383-2007-Determination of hydroxyl value); and
b) an isocyanatoalkylenetrialkoxysilane of the following formula (IV):

   OCN-R⁷-Si(OR⁸)₃ (IV)

   wherein
   R⁷ is selected from alkylene groups containing 1-20 carbon atoms;
   R⁸ is selected from alkyl groups containing 1-10 carbon atoms.

In some preferred embodiments, in the polyisocyanate of formula (II), R³ is selected from alkenyl groups and alkyl groups containing 2-14 carbon atoms.

In some preferred embodiments, in the polyisocyanate of formula (II), R³ is selected from phenylene, durenyl and naphthylene.

In some preferred embodiments, in the polyisocyanate of formula (II), R³ is selected from araliphatic hydrocarbon-based groups containing 8-15 carbon atoms, wherein the aromatic moiety is a phenyl group or a diphenyl group, and the aliphatic moiety is an alkenyl group containing 2-14 carbon atoms or an alkyl group containing 1-14 carbon atoms.

As examples of the polyisocyanate, the following can be mentioned: vinyl diisocyanate, tetramethylene-1,4-diisocyanate, hexamethylene diisocyanate(HDI), dodecyl-1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrotoluene-2,6-diisocyanate, hexahydrophenyl-1,3-diisocyanate, hexahydrophenyl-1,4-diisocyanate, perhydro-diphenylmethane-2,4-diisocyanate, perhydro-diphenylmethane-4,4-diisocyanate, phenylene-1,3-diisocyanate, phenylene-1,4-diisocyanate, durene-1,4-diisocyanate, stilbene-1,4-diisocyanate, 3,3-dimethyl-4,4-diphenyldiisocyanate, toluene-2,4-diisocyanate(TDI), toluene-2,6-diisocyanate(TDI), diphenylmethane-2,4'-diisocyanate(MDI), diphenylmethane-2,2'-diisocyanate(MDI), diphenylmethane-4,4'-diisocyanate(MDI), mixtures of diphenylmethane diisocyanate homologues with more rings (polymeric MDI), naphthylene-1,5-diisocyanate(NDI), isophorone diisocyanate (IPDI) or oligomers thereof, their isomers and mixtures thereof with their isomers.

The polyisocyanate used in the present invention may also be selected from the isocyanates obtained by modifying the above polyisocyanates with carbodiimide, allophanate or isocyanate (e.g., diphenylmethane diisocyanate modified with carbodiimide), their isomers and mixtures thereof with their isomers.

The polyisocyanate has a viscosity preferably of 5-600 mPa·s, particularly preferably of 10-300 mPa·s, determined at 25°C according to DIN 53019-1-3.

The polyisocyanate may also be used in the form of polyisocyanate prepolymer. These polyisocyanate prepolymers may be obtained by reacting an excessive amount of the above polyisocyanate with a compound having at least two isocyanate reactive groups at a temperature of 30-100°C, preferably about 80°C, for example. The polyisocyanate prepolymer of the present invention preferably has a NCO content of 20-33wt.%, particularly preferably of 25-32wt.%. The compounds having at least two isocyanate reactive groups are well known to those skilled in the art, which, for example, can be found in chapter 3.1 of <Plastics Handbook> ("Kunststoffhandbuch, 7, Polyurethanes", Carl Hanser-Verlag, 3rd Ed., 1993). The content of the literature is incorporated herein by reference in its entirety.

The polyol is one or more selected from: polyether polyols, polyester polyols and polycarbonate polyols.

The polyol includes the polyether polyol with small molecules as polyol starter. The small molecule polyol starter is preferably but not limited to polyhydroxy compounds, such as water, ethylene glycol, 1,2-propanediol, 1,3-propanediol, diethylene glycol, trimethylolpropane and mixtures thereof.

The polyether polyol can be prepared by a known process, for example, by reacting an olefin oxide with a starter in the presence of a catalyst. The catalyst is preferably but not limited to basic hydroxide, basic alkoxide, antimony pentachloride, boron (tri)fluoride etherate, double metal cyanide catalyst, or a mixture thereof. The olefin oxide is preferably but not limited to tetrahydrofuran, ethylene oxide, 1,2-propylene oxide, 1,2-butylene oxide, 2,3-butylene oxide, styrene oxide, or a mixture thereof, more preferably ethylene oxide and/or propylene oxide. The starter is preferably but not limited to a polyhydroxy compound or a polyamino compound, wherein the polyhydroxy compound is preferably but not limited to water, ethylene glycol, 1,2-propanediol, 1,3-propanediol, diethylene glycol, trimethylolpropane, glycerol, bisphenol A, bisphenol S or a mixture thereof, and the polyamino compound is preferably but not limited to ethylenediamine, propylenediamine, butylenediamine, hexamethylenediamine, diethylenetriamine, toluenediamine or a mixture thereof.

The polyester polyol is prepared by reacting a dicarboxylic acid or a dicarboxylic acid anhydride with a polyol. The dicarboxylic acid is preferably but not limited to an aliphatic carboxylic acid containing 2-12 carbon atoms, such as succinic acid, malonic acid, glutaric acid, adipic acid, octanedioic acid, azelaic acid, sebacic acid, dodecanoic acid, maleic acid, fumaric acid, phthalic acid, isophthalic acid, terephthalic acid or a mixture thereof. The dicarboxylic acid anhydride is preferably but not limited to phthalic anhydride, tetrachlorophthalic anhydride, maleic anhydride or a mixture thereof. The polyol is preferably but not limited to ethylene glycol, diethylene glycol, 1,2-propanediol, 1,3-propanediol, dipropylene glycol, 1,3-methylpropanediol, 1,4-butanediol, 1,5-pentanediol, 1,6-hexanediol, neopentyl glycol, 1,10-decanediol, glycerol, trimethylolpropane, or a mixture thereof. The polyester polyol further includes polyester polyol prepared from lactone. The polyester polyol prepared from lactone is preferably but not limited to that prepared from caprolactone.

The polycarbonate polyol is preferably but not limited to polycarbonate diol. The polycarbonate diol may be prepared by reacting a diol with a dialkyl carbonate or diaryl carbonate with phosgene. The diol is preferably but not limited to 1,2-propanediol, 1,3-propanediol, 1,4-butanediol, 1,5-pentanediol, 1,6-hexanediol, diethylene glycol, trioxane diol, or a mixture thereof. The dialkyl carbonate or diaryl carbonate is preferably but not limited to diphenyl carbonate.

The polyol is preferably the polyether polyol mentioned above.

In some preferred embodiments, in the N-alkylaminoalkylenetrialkoxysilane of formula (III), R⁴ is selected from alkyl groups containing 1-6 carbon atoms; R⁵ is selected from alkylene groups containing 1-10 carbon atoms; R⁶ is selected from alkyl groups containing 1-6 carbon atoms.

In some preferred embodiments, in the N-alkylaminoalkylenetrialkoxysilane of formula (III), R⁴ is selected from alkyl groups containing 1-4 carbon atoms; R⁵ is selected from alkylene groups containing 1-6 carbon atoms; R⁶ is selected from alkyl groups containing 1-4 carbon atoms.

In some preferred embodiments, in the isocyanatoalkylenetrialkoxysilane of formula (IV), R⁷ is selected from alkylene groups containing 1-10 carbon atoms; R⁸ is selected from alkyl groups containing 1-6 carbon atoms.

In some preferred embodiments, in the isocyanatoalkylenetrialkoxysilane of formula (IV), R⁷ is selected from alkylene groups containing 1-6 carbon atoms; R⁸ is selected from alkyl groups containing 1-4 carbon atoms.

As the silane-terminated polyurethane prepolymer useful in the present invention, examples that may be mentioned include, for example, Desmodur S XP series provided by Covestro Polymer Co., Ltd., such as Desmodur S XP 2458, Desmodur S XP 2821, Desmodur S XP 2636, Desmodur S XP 2749, Desmodur S XP 2774 and so on.

Preferably, the silane-terminated polyurethane prepolymer used in the present invention has a number-average molecular weight of less than 4000g/mol, more preferably between 200 g/mol and 2000 g/mol.

Preferably, the amount of the silane-terminated polyurethane prepolymer is 5 wt.% to 90 wt.%, preferably 10 wt.% to 60 wt.%, particularly preferably 10 wt.% to 30 wt.%, based on that the total weight of the composition is 100 wt.%.

### Organic Solvent:

The organic solvent useful in the present invention may be an anhydrous solvent commonly used in the coating field, such as xylene, ethyl acetate, butyl acetate, anhydrous ethanol, n-butanol, methyl ethyl ketone, ethylene glycol monobutyl ether or a mixture thereof.

Preferably, if present, the amount of the organic solvent is 10 wt.% to 90 wt.%, preferably 20 wt.% to 85 wt.%, more preferably 30 wt.% to 85 wt.%, most preferably 70 wt.% to 85 wt.%, based on that the total weight of the composition is 100 wt.%.

### Catalyst:

The inventors of the present invention have surprisingly found that certain catalysts can simultaneously catalyze hydrolysis and condensation reaction rates of silane coupling agent. By reasonably adjusting the type and amount of the catalyst, the hydrolysis and condensation reaction rates of silane coupling agent can be adjusted so that the composition of the invention experiences ideal hydrolysis and condensation reaction rates during practical application, which closely coordinates with the subsequent polyurethane RIM reaction rate and renders the whole production system to operate quickly and safely.

Suitable catalyst for the composition of the present invention includes 1,8-diazabicyclo[5.4.0]undec-7-ene(DBU), 1,5-diazabicyclo[4.3.0]non-5-ene(DBN), particularly preferably 1,8-diazabicyclo[5.4.0]undec-7-ene.

Preferably, if present, the amount of the catalyst is 0.05 wt.% to 0.5 wt.%, preferably 0.10 wt.% to 0.30 wt.%, more preferably 0.14 wt.% to 0.25 wt.%, most preferably 0.14 wt.% to 0.20 wt.%, based on that the total weight of the composition is 100 wt.%.

Preferably, the composition of the present invention comprises no water. The expression "comprises no water" means that no water is intentionally added during the preparation process of the composition of the present invention. If due to raw material or processing or the like, the composition of the present invention will inevitably comprise water, then the content of which is preferably less than 0.1 wt.%.

According to the second aspect of the present invention, there provides a method for manufacturing a bulk with glass fixed thereon, comprising the steps of:
I) coating the composition for glass treatment according to the present invention on the surface of the glass; and
II) injecting a polyurethane RIM system between the glass surface coated with the composition and the bulk, and reacting the polyurethane RIM system to cure.

The polyurethane RIM system is a polyurethane RIM system used to fix and seal glass in the field and therefore no more detail is provided herein.

The bulk is an article manufactured with artificial stone, wood, artificial wood, marble, terrazzo, ceramics, linoleum, metal, mineral material, plastic, rubber, concrete, composite board, paper, leather or glass, most preferably an article manufactured with plastic or metal.

For example, the bulk is selected from body and window frame of vehicles such as cars and trains.

Preferably, the polyurethane RIM system is injected after the composition for glass treatment according to the present invention is dried.

According to the third aspect of the present invention, there provides a bulk with glass fixed thereon manufactured by the method according to the second aspect of the present invention.

According to the forth aspect of the present invention, there provides use of the bulk with glass fixed thereon according to the present invention for manufacturing vehicles.

The examples of the present invention are illustratively described hereinafter, so that those skilled in the art can better understood the advantages and characteristics of the present invention in order to define the scope of protection of the present invention more clearly and explicitly.

### Examples

The following raw materials are used in the examples:
Silane Coupling Agent:

| **Reference No.** | **Name** | **CAS No.** |
|---|---|---|
| A-1524 | γ-ureidopropyltrimethoxysilane | 23843-64-3 |
| A-1170 | bis-(y-trimethoxysilylpropyl)amine | 82985-35-1 |
| A-1100 | 3-aminopropyltriethoxysilane | 919-30-2 |

Desmodur S XP 2458: a silane-terminated aliphatic prepolymer, viscosity at 23°C: about 30000-40000 mPa·s, containing no solvents, containing 10% of a plasticizer Mesamoll®, purchased from Covestro Polymer Co., Ltd.
Desmodur S XP 2821: a silane-terminated aliphatic prepolymer, containing no solvents, viscosity at 23°C: about 20000 mPa·s, purchased from Covestro Polymer Co., Ltd.
Desmodur S XP 2636: a silane-terminated aliphatic prepolymer, containing no solvents, viscosity at 23°C: about 30000-50000 mPa·s, purchased from Covestro Polymer Co., Ltd.
Desmodur S XP 2749: a silane-terminated aliphatic prepolymer, containing no solvents, viscosity at 23°C: about 4500 mPa·s, purchased from Covestro Polymer Co., Ltd.
Desmodur S XP 2774: a silane-terminated aliphatic prepolymer, containing no solvents, viscosity at 23°C: ∼50000 mPa·s, purchased from Covestro Polymer Co., Ltd.
DBU: 1,8-diazabicyclo[5.4.0]undec-7-ene.
EFBOND DW 646: a glass activator, purchased from EMS-EFTEC (Switzerland).
EFBOND DV 930: a glass primer, purchased from EMS-EFTEC (Switzerland).
Bayflex® 48XA116: a polyether system used in polyurethane RIM system, purchased from Covestro Polymer Co., Ltd.
Desmodur® 48IF46: modified isocyanate prepolymer, NCO%=24, purchased from Covestro Polymer Co., Ltd.

The following tests are carried out in the examples:
Tack-free time is determined according to GB/T13477.5-2002.

90° bonding force between the polyurethane RIM system and the glass is determined by the following steps:
cutting experimental samples with the following sizes:
glass plate: 200*25*5 mm
plastic strip: 200*25*5 mm;
then placing the glass plate into a mold for injection moulding during the period of validity of the primer according to relevant technological operations;
clamping the wrapping strip with a clamp while fixing the glass with a fixture, and always keeping it at 90° during the test; setting a stretching speed of 50mm/min, and reading the maximum force value as the bonding force value, and visually inspecting the delamination at the same time.

### Comparative Example 1

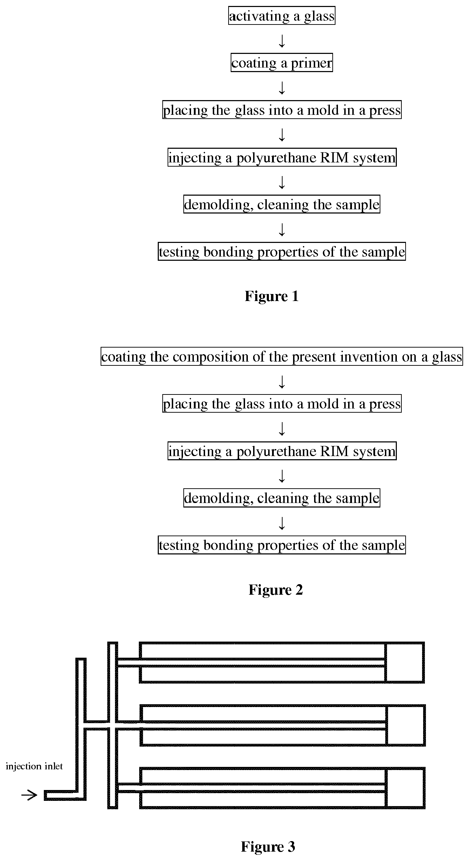

Referring to Fig.1, glass plates were treated according to the prior art in this comparative example. Specifically, glass platess which were cleaned by washing and dried completely were placed onto a worktable. A small amount of a glass activator (EFBOND DW 646) was dipped with a brush and then coated on the glass plates as thin as possible. The thickness of the wet film on the surface of the glass plates was controlled to be 50 um with a blade coater. The tack-free time was determined to be about 10 minutes.

After the activator film was tack-free, a small amount of a glass primer (EFBOND DV 930) was dipped with a brush and then coated on the glass plates as thin as possible. The thickness of the wet film on the surface of the glass plate was controlled to be 50 um with a blade coater. The tack-free time was determined to be about 3 minutes.

The glass plates were placed into a mold 20 minutes after the film coating. Three pieces of glass plate samples were placed into each mold. Figure 3 is a schematic diagram of a mold for testing the bonding strength between the polyurethane RIM system and the glass plates. Then the mold was placed into the mold cavity of a press and the temperature of the mold cavity was controlled at 95-105 °C. The polyurethane RIM system was injected following the processing conditions shown in Table 1.

**Table 1**

| Name of Polyurethane RIM System | Polyether System: Bayflex® 48XA116: Isocyanate: Desmodur® 48IF46 |
|---|---|
| RIM Machine | Krauss Maffei: Comet 5-5 |
| Mixing Head | MK 12/18-ULP-2K, |
| Output | 250 g/s |
| Mixing Ratio | Polyol/Isocyanate = 100/66 |
| Injection Pressure(Bar) | Polyol: 150; Isocyanate: 150 |
| Raw Material Temp.(°C) | Polyol: 40; Isocyanate: 40 |
| Injection Time & Amount(s/g) | 0.3 s, 75g |
| Mold Temp.(°C) | 95-105 |
| Demolding Time(s) | 45-90 |

The bonding strength between the polyurethane RIM system and the glass plates was measured and the bonding failure mode was determined. The results are summarized in Table 3 and Table 4.

### Examples 1-10

Xylene, ethyl acetate, ethylene glycol monobutyl ether, anhydrous ethanol and n-butanol were selected to formulate an organic solvent according to the following Table 2.

**Table 2 Organic Solvent**

| Solvent | Amount |
|---|---|
| Ethyl Acetate | 20wt% |
| Xylene | 40wt% |
| Anhydrous Ethanol | 30wt% |
| Ethylene Glycol Monobutyl Ether | 5wt% |
| n-Butanol | 5wt% |

Firstly, a silane-terminated polyurethane prepolymer and the above organic solvent were mixed for 5 minutes and then a suitable amount of a silane coupling agent and 1,8-diazabicyclo[5.4.0]undec-7-ene(DBU) were added and mixed for 30 seconds. The mixture was placed on a shaker to shake for about 40min and a composition was obtained after the mixture became homogeneous. The compositions in Examples 1-10 were prepared following the same steps as above with the amounts of raw materials shown in the following Table 3.

Referring to Fig. 2, Glass plates which were cleaned by washing and dried completely were placed onto a worktable at room temperature. A small amount of each composition from Examples 1-10 was respectively dipped with a brush and then coated on the glass plates as thin as possible. The thickness of the wet film on the surface of the glass was controlled to be 50 um with a blade coater. The tack-free time was determined and results were summarized in Table 3.

The glass plates were placed into a mold 20 minutes after the film coating. Three pieces of glass plate samples were placed into each mold. Figure 3 is a schematic diagram of a mold for testing the bonding strength between the polyurethane RIM system and the glass plates. Then the mold was placed into the mold cavity of a press and the temperature of the mold cavity was controlled at 95-105 °C. The polyurethane RIM system was injected following the processing conditions shown in Table 1.

The bonding strength between the polyurethane RIM system and the glass plates was measured and the bonding failure mode was determined. The results are summarized in Table 3.

**Table 3 Tack-Free Time of Modified Silane Binder and Bonding Strength between RIM System and Glass plates**

| Component | Unit* | Comp. Ex. 1 | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Organic Solvent | pbw | First coating EFBO ND DW 646 | 80 | 80 | 80 | 80 | 80 | 80 | 80 | 80 | 80 | 80 |
| S XP 2774 | pbw | | 20 | | | | | | | | | |
| S XP 2636 | pbw | | | 20 | | | | | | | | |
| S XP 2458 | pbw | | | | 20 | | | | | | | |
| S XP 2749 | pbw | Subseq uently coating EFBO ND DV 930 | | | | 20 | | | | | | |
| S XP 2821 | pbw | | | | | | 20 | 20 | 20 | 20 | 20 | 20 |
| DBU | pbw | | 0.15 | 0.15 | 0.15 | 0.15 | 0.15 | 0.15 | 0.15 | 0.15 | 0.05 | 0.25 |
| A-1100 | pbw | | 0.8 | 0.8 | 0.8 | 0.8 | 0.8 | - | - | - | 0.8 | 0.8 |
| A-1524 | pbw | | | | | | | 0.8 | - | 0.4 | | |
| A-1170 | pbw | | | | | | | | 0.8 | 0.4 | | |
| Tack-Free Time of 50um-thick Film | min | 10-13 | 15-18 | 15-18 | 15-18 | 15-18 | 15-18 | 15-18 | 15-18 | 15-18 | 35 | 8 |
| Bonding Failure Position | - | PU Bulk | PU Bulk | PU Bulk | Binder Layer | PU Bulk | PU Bulk | PU Bulk | PU Bulk | PU Bulk | PU Bulk | PU Bulk |
| Bonding Force | N/mm | 6-7 | 4-5 | 4-6 | 3-4 | 4-5 | 6-7 | 5-6 | 5-6 | 5-6 | 4-5 | 3-4 |

| | | | | | | | | | | | | |
|---|---|---|---|---|---|---|---|---|---|---|---|---|
| *: pbw: % by weight. | | | | | | | | | | | | |

It can be seen from Table 3 that the prior two-step method of activating and priming the glass plate can be modified into a one-step method by the composition of the present invention.

It can be seen from the data in Table 3 that, in general, with Desmodur S XP series and silane products as the primer material, the bonding force between the polyurethane RIM system and the glass may both be no less than 4 N/mm, which meets basic requirements.

With Desmodur S XP 2458 and silane products as the primer material, due to the 10% of a plasticizer Mesamoll® present in Desmodur S XP 2458, which may reduce the bonding force between the polyurethane RIM system and the glass, the bonding force between them is 3-4 N/mm.

With Desmodur S XP 2821 series and silane products as the primer material, the bonding force between the polyurethane RIM system and the glass is close to the result from the two-step method

(i.e., 5-7 N/mm), which meets basic requirements. The bonding properties degrade when the catalyst content in the system is too high or too low.

The position at which the bonding failure occurs is the polyurethane bulk, indicating the strength of the binder is higher than that of the polyurethane bulk and the bonding is good.

### Examples 11-15

As described in Examples 1-10, xylene, ethyl acetate, ethylene glycol monobutyl ether, anhydrous ethanol and n-butanol were selected to formulate an organic solvent according to Table 2.

Firstly, a silane-terminated polyurethane prepolymer and the above organic solvent were mixed for 5 minutes and then a suitable amount of a silane coupling agent and DBU were added and mixed for 30 seconds. The mixture was placed on a shaker to shake for about 40 minutes and a composition was obtained after the mixture became homogeneous. The compositions in Examples 11-15 were prepared following the same steps as above with the amounts of raw materials shown in the following Table 4.

Glass plates which were cleaned by washing and dried completely were placed onto a worktable at room temperature. A small amount of each composition from Examples 11-15 was respectively dipped with a brush and then coated on the glass plate as thin as possible. The thickness of the wet film on the surface of the glass plates was controlled to 50 um with a blade coater. The tack-free time was determined and the results were summarized in Table 4.

The glass plates were placed into a mold 20 minutes after the film coating. Three pieces of glass plate samples were placed into each mold. Figure 3 is a schematic diagram of a mold for testing the bonding strength between the polyurethane RIM system and the glass plates. Then the mold was placed into the mold cavity of a press and the temperature of the mold cavity was controlled at 95-105 °C. The polyurethane RIM system was injected following the processing conditions shown in Table 1.

The bonding strength between the polyurethane RIM system and the glass plates was measured and the bonding failure mode was determined. The results are summarized in Table 4.

**Table 4 Bonding Strength between Polyurethane RIM System and Glass**

| Component | Comp. Ex. 1 | Ex. 5 | Ex. 11 | Ex. 12 | Ex. 13 | Ex. 14 | Ex. 15 |
|---|---|---|---|---|---|---|---|
| SXP 2821/pbw | First coating EFBOND DW 646 | 20 | 20 | 20 | 20 | 20 | 20 |
| Organic Solvent/pb w | | 80 | 80 | 80 | 80 | 80 | 80 |
| A-1100/pbw | Subsequentl y coating EFBOND DV 930 | 0.8 | 0.5 | 0.2 | 1.1 | 1.4 | 1.7 |
| DBU/pbw | | 0.15 | 0.15 | 0.15 | 0.15 | 0.15 | 0.15 |
| Tack-Free Time of 50um-thick Film | 10-13 min | 15-18 min | 15-18 min | 15-18 min | 15-18 min | 15-18 min | 15-18 min |
| Bonding Failure Position | PU Bulk | PU Bulk | PU Bulk | PU Bulk | PU Bulk | PU Bulk | PU Bulk |
| Bonding Force N/mm | 6-7 | 6-7 | 5-6 | 4-5 | 5-6 | 4-5 | 4 |

It can be seen from the results in Table 4 that the bonding strengths obtained from the examples of the present invention and the comparative example are all no less than 4N/mm, which meets the requirements for bonding strength of automotive glass. A longer operation time after film coating can be achieved with the composition of the present invention. It can be seen from the values of the bonding force that the glass bonding properties obtained by the one-step method of coating the composition of the present invention are similar to those obtained by the two-step method of glass activating and priming. The position at which the bonding failure occurs is the polyurethane bulk, indicating the strength of the binder is higher than that of the polyurethane bulk and the bonding is good.

The above description is merely illustrative embodiments or examples of the present invention, without intention to limit the present invention. For those skilled in the art, there can be various modifications and changes to the present invention. Therefore, any modifications, equivalent substitutions, improvements and the like made within the spirit and principle of the present invention will be encompassed within the scope of the claims of the present application.

## Claims

1. A composition for glass treatment, comprising a silane coupling agent, a silane-terminated polyurethane prepolymer, an optional organic solvent and an optional catalyst.

2. The composition according to claim 1, wherein the amount of the silane-terminated polyurethane prepolymer is 5 wt.% to 90 wt.% and the amount of the silane coupling agent is 0.2 wt.% to 3 wt. %, based on that the total weight of the composition is 100 wt.%.

3. The composition according to claim 1, wherein the amount of the organic solvent is 10 wt.% to 90 wt.%, preferably 20 wt.% to 85 wt.%, more preferably 30 wt.% to 85 wt.%, most preferably 70 wt.% to 85 wt.%, based on that the total weight of the composition is 100 wt.%.

4. The composition according to any one of claims 1-3, wherein the silane coupling agent is represented by the general formula (I):
Y-R¹-Si-(CH₃)ₙX₃₋ₙ (I)
wherein:
X is selected independently from: Cl, CH₃O-, C₂H₅O-, (CH₃)₂CH-O-, CH₃OCH₂CH₂O-;
R¹ is an alkylene group containing 1-20 carbon atoms;
Y is selected from -NH₂, -NHR² and isocyanate group, wherein R² is selected from alkyl groups containing 1-10 carbon atoms;
n is 0 or 1.

5. The composition according to any one of claims 1-3, wherein the silane-terminated polyurethane prepolymer is obtained by reacting a system comprising the following components:
A) a polyisocyanate of the following formula (II):
R³(NCO)ₙ formula (II)
wherein
R³ is selected from aliphatic hydrocarbon-based groups containing 2-18 carbon atoms, aromatic hydrocarbon-based groups containing 6-15 carbon atoms and araliphatic hydrocarbon-based groups containing 8-15 carbon atoms;
n is 2-4;
B) a polyol, which has a number-average molecular weight of 100-20000g/mol and a functionality of 1-5; and
C) a N-alkylaminoalkylenetrialkoxysilane of the following formula (III):
R⁴NH-R⁵-Si(OR⁶)₃ (III)
wherein
R⁴ is selected from alkyl groups containing 1-10 carbon atoms;
R⁵ is selected from alkylene groups containing 1-20 carbon atoms;
R⁶ is selected from alkyl groups containing 1-10 carbon atoms.

6. The composition according to any one of claims 1-3, wherein the silane-terminated polyurethane prepolymer is obtained by reacting a system comprising the following components:
a) a polyol, which has a number-average molecular weight of 100-20000g/mol and a functionality of 1-5; and
b) an isocyanatoalkylenetrialkoxysilane of the following formula (IV):
OCN-R⁷-Si(OR⁸)₃ (IV)
wherein
R⁷ is selected from alkylene groups containing 1-20 carbon atoms;
R⁸ is selected from alkyl groups containing 1-10 carbon atoms.

7. The composition according to any one of claims 1-3, wherein the catalyst is selected from 1,8-diazabicyclo[5.4.0]undec-7-ene and 1,5-diazabicyclo[4.3.0]non-5-ene.

8. The composition according to any one of claims 1-7, wherein the amount of the catalyst is 0.05 wt.% to 0.5 wt.%, based on that the total weight of the composition is 100wt%.

9. A method for manufacturing a bulk with glass fixed thereon, comprising the steps of:
I) coating the composition for glass treatment according to any one of claims 1-8 on the surface of the glass; and
II) injecting a polyurethane RIM system between the glass surface coated with the composition and the bulk, and reacting the polyurethane RIM system to cure.

10. The method according to claim 9, wherein the bulk is an article manufactured with artificial stone, wood, artificial wood, marble, terrazzo, ceramics, linoleum, metal, mineral material, plastic, rubber, concrete, composite board, paper, leather or glass, most preferably an article manufactured with plastic or metal.

11. The method according to claim 9, wherein the bulk is selected from body and window frame of vehicles such as cars and trains.

12. The method according to any one of claims 9-11, wherein the polyurethane RIM system is injected after the composition for glass treatment according to any one of claims 1-8 is dried.

13. A bulk with glass fixed thereon manufactured by the method according to any one of claims 9-12.

14. Use of the bulk with glass fixed thereon according to claim 13 for manufacturing vehicles.
